# EUROPEAN PATENT SPECIFICATION

(11) **EP 2 415 712 B1**
(45) Date of publication and mention of the grant of the patent: **03.05.2017**
(21) Application number: 09842958.2
(22) Date of filing: 30.03.2009
(51) Int. Cl.: C01B 33/107, B01D 53/00

(54) **METHOD FOR COLLECTION OF HEXACHLORODISILANE**
VERFAHREN ZUM AUFFANGEN VON HEXACHLORDISILAN
PROCÉDÉ DE COLLECTE D'HEXACHLORODISILANE

(43) Date of publication of application: 08.02.2012
(73) Proprietor: Denka Company Limited, Tokyo 103-8338 (JP)
(72) Inventor: MATSUO, Yasufumi, Itoigawa-shi Niigata 949-0393 (JP); TAKEMURA, Kouichi, Itoigawa-shi Niigata 949-0393 (JP); SUGIMURA, Shin, Itoigawa-shi Niigata 949-0393 (JP)
(74) Representative: Blodig, Wolfgang
(86) International application number: PCT/JP2009/056479
(87) International publication number: WO 2010/116448

(56) References cited:
- JP-A- 2008 303 142
- JP-A- 2009 007 240
- JP-A- 2009 062 212
- US-A- 4 217 334

## Description

### TECHNICAL FIELD

The present invention relates to a method for collecting hexachlorodisilane (Si₂Cl₆) produced as a by-product during the production of trichlorosilane from tetrachlorosilane and hydrogen.

### BACKGROUND ART

Trichlorosilane (SiHCl₃) is a special material gas used in the production of semiconductors, liquid crystal panels and solar cells etc. In recent years, demand has expanded steadily, and as a CVD material widely used in the electronics field, its growth is also expected in the future.

Trichlorosilane is synthesized by allowing vaporized tetrachlorosilane (SiCl₄) and hydrogen (H₂) to contact and reach the following state of thermal equilibrium in a reactor.

SiCl₄ + H₂ ⇔ SiHCl₃ + HCl (1)

This reaction is carried out by heating a source gas consisting of vaporized tetrachlorosilane and hydrogen to 700 to 1400 °C in a reactor.

Additionally, besides the above reaction, the following equilibrium reactions occur at this time, and other than trichlorosilane, monochlorosilane (SiH₃Cl), dichloro-silane (SiH₂Cl₂) and -silylene (SiCl₂) etc. are produced as by-products.

SiCl₄ + 3H₂ ⇔ SiH₃Cl + 3HCl (2)

SiCl₄ + 2H₂ ⇔ SiH₂Cl₂ + 2HCl (3)

SiHCl₃ ⇔ SiCl₂ + HCl (4)

In order to efficiently collect trichlorosilane, as shown in Patent Document 1, after reaching the thermal equilibrium of the above equation (1), the reaction product gas needs to be cooled to a predetermined temperature as quickly as possible to freeze the equilibrium so that trichlorosilane, once generated, does not return to tetrachlorosilane. To instantly freeze the above state of equilibrium, the reaction product gas typically needs to be quenched to approximately 600 °C in less than one second.

When quenching, SiCl₂ generated at a high temperature may react with tetrachlorosilane to produce hexachlorodisilane (Si₂Cl₆) as a by-product, as shown in the following equation (5).

SiCl₂ + SiCl₄ → Si₂Cl₆ (5)

Thus, the reaction product gas after quenching contains, in addition to the trichlorosilane and hydrogen chloride generated by the above equation (1), large amounts of unreacted tetrachlorosilane and hydrogen, as well as various chlorosilanes such as monochlorosilane, dichlorosilane and hexachlorodisilane produced as by-products by the above equations (2) to (5). Among them, as indicated below, hexachlorodisilane has a particularly high boiling point as compared to other main chlorosilanes in the reaction product gas.

| Substance Name | Chemical Formula | Boiling Point |
|---|---|---|
| Hexachlorodisilane | Si₂Cl₆ | 145 °C |
| Tetrachlorosilane | SiCl₄ | 57 °C |
| Trichlorosilane | SiHCl₃ | 32 °C |
| Dichlorosilane | SiH₂Cl₂ | 8 °C |
| Monochlorosilane | SiH₃Cl | -31 °C |

However, there is the risk of a high boiling material such as hexachlorodisilane attaching to the pipe walls in a plant and blocking the pipes, thus hampering the continuous operation of the plant.

In order to avoid a by-product of a high boiling material such as hexachlorodisilane, Patent Document 1 proposes decreasing the reaction temperature in the above equation (1) or using hydrogen chloride as a coolant gas when cooling the reaction product gas to degrade hexachlorodisilane by the following equation (6).

Si₂Cl₆ + HCl ⇔ SiHCl₃ + SiCl₄ (6)

Patent Document 2 describes a process for the production of chlorosilanes.
Patent Document 1: JP-A 2008-137885
Patent Document 2: US 4,217,334

### SUMMARY OF THE INVENTION

However, the reaction of equation (1), which generates trichlorosilane from tetrachlorosilane and hydrogen, is an endothermic reaction, and therefore, according to Le Chatelier's principle, cooling alone would be enough to tip the equilibrium towards canceling out the lowering of temperature by cooling, i.e., towards generating tetrachlorosilane from trichlorosilane and hydrogen chloride. Despite that, when hydrogen chloride is introduced as a coolant gas in large amounts, the HCl concentration in the reaction system increases, and the equilibrium in the above equation (1) is further pushed to the left. Consequently, when hydrogen chloride is used as a coolant gas, the production of a high boiling material as a by-product may be avoidable, but as a result, there is a risk of the efficiency of trichlorosilane collection being reduced.

On the other hand, hexachlorodisilane is industrially useful as a raw material of disilane (Si₂H₆) which, as a raw material for silicon production, has superior electrical properties and deposition rate by chemical vapor deposition. For that reason, it is desirable that hexachlorodisilane be actively collected and used.

The present invention was achieved in view of the above circumstances, and the objects are to collect hexachlorodisilane produced as a by-product in that case and to make it industrially usable, as well as to provide a method for collecting hexachlorodisilane, which increases the operational efficiency and allows continuous operation of a plant.

In order to solve the above problems, the present invention adopts the following constitution.

That is, the method for collecting hexachlorodisilane of the present invention is characterized by comprising the steps of:
- reacting a source gas containing vaporized tetrachlorosilane and hydrogen at a temperature ranging from 700 to 1400 °C to obtain a reaction product gas;
- cooling the reaction product gas to a temperature range of 30 to 60 °C to obtain a cooled condensate liquid containing hexachlorodisilane; and
- concentrating and collecting a high boiling material containing hexachlorodisilane from the cooled condensate liquid.

Also described herein is a plant for collecting hexachlorodisilane, that is characterized by comprising:
- a reactor for reacting a source gas containing vaporized tetrachlorosilane and hydrogen at a temperature ranging from 700 to 1400 °C to obtain a reaction product gas,
- a quenching tower for cooling the reaction product gas to a temperature range of 30 to 60 °C to obtain a cooled condensate liquid containing hexachlorodisilane, and
- a concentrating column for concentrating and collecting a high boiling material containing hexachlorodisilane from the cooled condensate liquid.

According to the present invention, by quenching the reaction product gas to a temperature range of 30 to 60 °C in the quenching tower, the cooled condensate liquid can be removed from the bottom of the quenching tower and a cooled and uncondensed gas can be removed separately from the top of the quenching tower. Here, almost all trichlorosilane produced is in the cooled and uncondensed gas, and the high boiling material containing almost all of the hexachlorodisilane produced as a by-product is in the cooled condensate liquid. For that reason, there is almost no hexachlorodisilane present during the fractional distillation process of the main trichlorosilane, and the possibility of a pipe involved in the fractional distillation of trichlorosilane being blocked by a high boiling material is low.

Additionally, in general, when increasing the quenching efficiency so as to freeze the equilibrium, a high boiling material such as hexachlorodisilane tends to be produced as a by-product. However, according to the present invention, there is almost no hexachlorodisilane present during the fractional distillation process of the main trichlorosilane, so the cooling efficiency of the reaction product gas can be increased without any concern for the production of a high boiling material as a by-product. For that reason, there is no need to worry about the conversion ratio or collection ratio of trichlorosilane being decreased.

Moreover, by guiding the cooled condensate liquid obtained by cooling the reaction product gas in the quenching tower to the concentrating column and concentrating and collecting the high boiling material containing hexachlorodisilane, the high boiling material does not accumulate in the plant, and blocking of pipes can be prevented.

Similarly, the unevaporated fraction accumulated in the evaporator for vaporizing a tetrachlorosilane stock solution may also be let into the concentrating column so that a high boiling material containing hexachlorodisilane is concentrated and collected.

By adopting such a constitution, the removal of a high boiling material from the tetrachlorosilane stock solution allows rises in the boiling point of the tetrachlorosilane stock solution and increases in the quantity of heat required to vaporize tetrachlorosilane to be suppressed. Moreover, since a high boiling material such as hexachlorodisilane in the tetrachlorosilane stock solution can be removed by the first step in the plant, it is difficult for the high boiling material to accumulate inside the plant.

In addition, by adopting such a constitution, it is possible to use a low-purity tetrachlorosilane stock solution such as one contaminated with a high boiling material such as hexachlorodisilane, e.g. unreacted tetrachlorosilane collected from the plant, as a raw material, and the operational efficiency and economic efficiency of the plant can be increased.

Further, the collected hexachlorodisilane can be effectively utilized industrially as a raw material for silicon production.

### BRIEF DESCRIPTION OF THE DRAWING

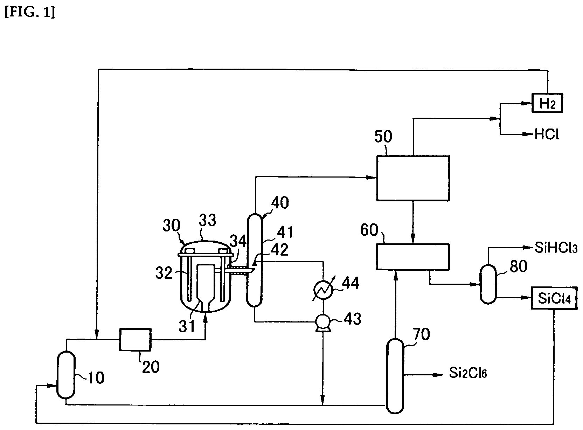

[Fig. 1] A diagram for explaining the flow of a method for collecting hexachlorodisilane, which is an embodiment of the present invention.

### Description of Reference Numbers

- 10: Evaporator
- 20: Preheater
- 30: Reactor
- 31: Reaction Vessel
- 32: Heater
- 33: Outer Cylindrical Casing
- 34: Extraction Pipe
- 40: Quenching Tower
- 41: Metal Vessel
- 42: Spray Nozzle
- 43: Pump
- 44: Cooling Device
- 50: Condenser
- 60: Tank
- 70: Concentrating column
- 80: Distillation column

### MODES FOR CARRYING OUT THE INVENTION

Herebelow, an embodiment of the present invention shall be explained with reference to the drawing.

Fig. 1 shows an outline of the flow in a method for collecting hexachlorodisilane of the present embodiment.

The method for collecting hexachlorodisilane of the present embodiment is basically carried out by a plant comprising:
- an evaporator 10 for vaporizing tetrachlorosilane;
- a preheater 20 for preheating a source gas containing the vaporized tetrachlorosilane and hydrogen;
- a reactor 30 for reacting the preheated source gas to a temperature ranging from 700 to 1400 °C to obtain a reaction product gas;
- a quenching tower 40 for cooling the reaction product gas to a temperature range of 30 to 60 °C to obtain a cooled condensate liquid containing hexachlorodisilane;
- a concentrating column 70 for concentrating and collecting a high boiling material containing hexachlorodisilane from the cooled condensate liquid;
- a condenser 50 for condensing trichlorosilane and tetrachlorosilane from a cooled and uncondensed gas of the reaction product gas;
- a tank 60 for temporarily storing a condensate liquid removed from condenser 50 and a low boiling material removed from concentrating column 70;
- a distillation column 80 for fractional distillation of trichlorosilane and tetrachlorosilane from an accumulation liquid let out from tank 60.

### <Evaporator>

Evaporator 10 is a device for vaporizing tetrachlorosilane, and anything commonly used as an evaporator may be used without limitations.

The heating temperature of the tetrachlorosilane stock solution in evaporator 10 may be 60 to 150 °C and preferably 60 to 120 °C at atmospheric pressure. When it is within this temperature range, tetrachlorosilane can be sufficiently evaporated without vaporizing a high boiling material such as hexachlorodisilane. Naturally if evaporator 10 is of a type capable of adjusting internal pressure, the optimal temperature for vaporizing tetrachlorosilane will correspondingly fluctuate from the above temperature range.

While the tetrachlorosilane stock solution supplied to evaporator 10 is preferably a high-purity tetrachlorosilane, it may be contaminated with a small amount of a high boiling material such as hexachlorodisilane. However, such a high boiling material will accumulate at the bottom of evaporator 10 as an unevaporated fraction and hamper the vaporization of tetrachlorosilane, so the unevaporated fraction accumulated at the bottom of evaporator 10 is removed from evaporator 10 in batches or continuously. Since industrially usable tetrachlorosilane or hexachlorodisilane is collected from the removed unevaporated fraction, it is supplied to concentrating column 70 described below.

### <Preheater>

The tetrachlorosilane vaporized in evaporator 10 is mixed with hydrogen gas and supplied to the below-described reactor 30 as a source gas. The mixing ratio of tetrachlorosilane and hydrogen gas may be, for example, 1:1 to 1:2 molar ratio.

The mixed gas, before being fed into reactor 30, may be heated by preheater 20 to a temperature close to that inside reactor 30. By doing so, the difference between the temperature of the mixed gas and the temperature inside reactor 30 is lessened, uneven temperatures inside reactor 30 will not occur, the conversion efficiency of reactor 30 can be improved and reactor 30 can be protected from localized concentration of thermal stress. Additionally, it is possible to prevent the generated trichlorosilane from returning to tetrachlorosilane due to temperature reduction caused by an inflow of the mixed gas.

### <Reactor>

Reactor 30 comprises a reaction vessel 31, an elongated heater 32 disposed so as to surround the exterior of reaction vessel 31, and an outer cylindrical casing 33 to accommodate reaction vessel 31 and heater 32. By heating the exterior wall of reaction vessel 31 using heater 32, the mixed gas of tetrachlorosilane and hydrogen reacts at a high temperature of approximately 700 °C to 1400 °C inside reaction vessel 31 to synthesize trichlorosilane according to the above equation (1).

### <Reaction Vessel>

Reaction vessel 31 is a vessel with a generally cylindrical shape for the reaction of tetrachlorosilane and hydrogen in a high temperature environment, and has a source gas inlet for introducing the source gas and a reaction product gas outlet for letting out the reaction product gas. In the present embodiment, the structure is such that the source gas inlet is provided in the center of the bottom of reaction vessel 31, and the reaction product gas outlet is provided on a side wall on the upper side of reaction vessel 31. An extraction pipe described below is inserted into the reaction product gas outlet and discharges the reaction product gas out of reactor 30.

The material constituting reaction vessel 31 is a graphite material that has superior gas tightness, and it is particularly preferable to use isotropic high purity graphite, which has a particulate structure that results in high strength, and has the same properties such as thermal expansion in all directions that result in superior heat-resistance and corrosion-resistance.

In particular, the inner periphery and/or outer periphery of reaction vessel 31 is preferably subjected to a silicon carbide coating treatment, and the silicon carbide coating is preferably formed by CVD at a thickness of 10 to 500 µm. Since silicon carbide coatings have a very high resistance against chemical decomposition, chemical corrosion of carbon structures can be prevented. For that reason, a silicon carbide coating treatment can protect the surfaces of reaction vessel 31 from corrosion.

In order to achieve superior durability and heat transfer efficiency, originally, it is preferred that reaction vessel 31 be integrally formed. However, depending on the scale of operation, when considering issues in production techniques, a vessel formed by connecting and integrating a plurality of generally cylindrical bodies may be used. In particular, reaction vessel 31 of the type formed by connecting and integrating a plurality of generally cylindrical bodies is preferably one that is formed by concentrically arranging a plurality of generally cylindrical bodies end-to-end on top of each other, and threadedly fastening the ends with rings from the outside. By using such a structure, a generally cylindrical structure can be simply made, and since no portion with a thin thickness is formed on the upper end or lower end, it has an excellent resistance against physical impacts. Moreover, since the joined portions are not of structures where an end of a generally cylindrical body is fitted into an end of another generally cylindrical body, even when the generally cylindrical bodies thermally expand due to use in a high temperature environment, breaks or cracks in the joined portions due to the different thermal expansion coefficient of each generally cylindrical body do not occur.

### <Heater>

Heater 32 is equipped with a plurality of elongated carbon-made heating elements that extend vertically and electrodes that are connected to one end of the heating elements for supplying electricity to the heating elements from an external power source. A plurality of heaters 32 are arranged to surround reaction vessel 31, and by controlling the amount of power supplied, they adjust the temperature inside reaction vessel 31 from outside reaction vessel 31.

### <Outer cylindrical casing>

Outer cylindrical casing 33 is a vessel of a generally cylindrical shape with its outside consisting of a metal such as stainless steel and the inside covered by a heat insulating material such as carbon board, fire-proof brick or heat insulating brick. Outer cylindrical casing 33 accommodates the above-mentioned reaction vessel 31 and heaters 32, and thermally insulates them from the outside. When reaction vessel 31 is accommodated inside outer cylindrical casing 33, a source gas inlet opening and a reaction product gas outlet opening are provided at positions respectively corresponding to the source gas inlet and reaction product gas outlet. A connection means is provided at the reaction product gas outlet opening and is connected with quenching tower 40 described below.

### <Extraction pipe>

Extraction pipe 34 is a carbon-made tubular member connected to the reaction product gas outlet of reaction vessel 31 via the reaction product gas outlet opening of outer cylindrical casing 33, and discharges the reaction product gas containing trichlorosilane generated inside reaction vessel 31 out of reactor 30.

The material constituting extraction pipe 34 is a graphite material that has superior gas tightness, and it is particularly preferable to use isotropic high purity graphite, which has a particulate structure that results in high strength, and has the same properties such as thermal expansion in all directions that result in superior heat-resistance and corrosion-resistance.

In particular, the inner periphery and/or outer periphery of extraction pipe 34 is preferably subjected to a silicon carbide coating treatment, and the silicon carbide coating is preferably formed by CVD to a thickness of 10 to 500 µm. Since silicon carbide coatings have a very high resistance against chemical decomposition, the surfaces of extraction pipe 34 can be protected from corrosion.

While extraction pipe 34 is preferably formed from a single member for superior gas tightness and strength, it may be formed by connecting a plurality of members. Typically, a flange may be used as a joining means for extraction pipe 34. Alternatively, tubular members of a generally cylindrical shape may be used and the ends may be threadedly fastened by rings from the outside.

### <Quenching tower>

Quenching tower 40 is equipped with a cylindrical metal vessel 41, a spraying means for spraying a coolant inside metal vessel 41, i.e. spray nozzle 42 that atomizes the coolant to minute liquid droplets, a pump 43 which removes each batch of condensate (i.e. cooled condensate liquid) generated by cooling of the coolant that is accumulated at the bottom of metal vessel 41 and cycling it to spray nozzle 42, and a cooling device 44 for cooling the coolant. A reaction product gas inlet opening is provided on a side wall of quenching tower 40 to be connected with the above-mentioned reactor 30. Spray nozzle 42 is placed near the upper part of the reaction product gas inlet opening such that the coolant can be sprayed towards the reaction product gas let into quenching tower 40. Additionally, a pipe is connected to the top of quenching tower 40 for supplying the gaseous fraction of the reaction product gas that remains gaseous even after cooling (i.e. cooled and uncondensed gas) to condenser 50 described below.

The coolant is preferably a liquid mixture consisting of tetrachlorosilane and trichlorosilane, the tetrachlorosilane content in the liquid mixture is preferably 80 to 100 mol%, more preferably 85 to 95 mol%. By using a coolant of the specific composition, reaction can be frozen and kept in a state in which the equilibrium in the above equation (1) is sufficiently shifted to the right, and trichlorosilane can be collected at a high yield.

Since the coolant will mix with the cooled condensate liquid generated by cooling of the reaction product gas and flow down inside quenching tower 40, the composition will change during continuous circulation. Therefore, the mixing ratio of the coolant needs to be kept constant by supplying a liquid preparation consisting of tetrachlorosilane and/or trichlorosilane to the coolant as necessary.

The coolant is preferably adjusted to a temperature of 50 °C or below. When the coolant is adjusted to a temperature of 50 °C or below, the temperature of the reaction product gas can be quenched within a short amount of time, and therefore the equilibrium in the above equation (1) can be frozen in a state in which the equilibrium is sufficiently shifted to the right.

The cooled and uncondensed gas removed from the top of quenching tower 40 is separated into a condensate liquid containing chlorosilanes and an uncondensed fraction containing hydrogen and hydrogen chloride in condenser 50. The removed hydrogen is reused in the source gas and hydrogen chloride is collected and industrially used separately. The condensate liquid containing chlorosilanes is temporarily stored in tank 60, then transferred to distillation column 80, and trichlorosilane and unreacted tetrachlorosilane are separated.

On the other hand, a part or all of the cooled condensate liquid (containing the coolant) removed from the bottom of quenching tower 40 is supplied to concentrating column 70 described below continuously or in batches without being circulated as a coolant.

The cooled condensate liquid comprises, in addition to the trichlorosilane and tetrachlorosilane that constitute the coolant, the trichlorosilane condensed by cooling of the reaction product gas and unreacted tetrachlorosilane, as well as by-products such as hexachlorodisilane.

### < Concentrating column>

The unevaporated fraction removed from evaporator 10 and the cooled condensate liquid (containing the coolant) removed from the bottom of quenching tower 40 are separated into a low boiling material containing trichlorosilane and tetrachlorosilane and a high boiling material containing hexachlorodisilane in concentrating column 70.

Concentrating column 70 may be a well known concentration device such as a multistage distillation device having a reboiler. The reboiler may be a type that acts as a jacket around the bottom of concentrating column 70 and directly heats it or a type in which a heat exchanger is placed outside the bottom of the column. It is also possible to adopt a type in which a heat exchanger is placed inside the bottom of the column. As the heat exchanger, in general, in order to maximize the area for heat transfer, a shell and tube type is favorably used, but it is also possible to use a coiled type or an electrical heater.

The temperature inside concentrating column 70 is preferably within a range of 60 to 200 °C, and more preferably within a range of 60 to 150 °C. Additionally, the pressure inside the column is preferably within a range of atmospheric pressure to 0.3 MPa (absolute pressure), and it is more preferably maintained within a range of atmospheric pressure to 0.2 MPa (absolute pressure). When the temperature and pressure inside concentrating column 70 are within these ranges, tetrachlorosilane and trichlorosilane which have relatively low boiling points among the chlorosilanes that are let in can be removed from the top of the column, and the concentration of hexachlorodisilane remaining at the bottom of the column can be sufficiently increased.

The tetrachlorosilane and trichlorosilane removed from the top of the column are cooled, condensed and temporarily stored in tank 60, then transferred to distillation column 80, and trichlorosilane and unreacted tetrachlorosilane are separated. The tetrachlorosilane removed here is reused in the source gas.

On the other hand, the concentrated high boiling material accumulating at the bottom of concentrating column 70 contains hexachlorodisilane in a high concentration, and can be used industrially. By repeating the distillation operation as necessary, the purity of hexachlorodisilane can be further increased.

### Examples

Herebelow, the present invention shall be more specifically explained with reference to an example, but the present invention is not limited thereto.

### [Example 1]

Trichlorosilane was generated and hexachlorodisilane produced as a by-product was collected using the plant shown in Fig. 1.

The evaporator was adjusted such that the inner temperature was 100 °C and the inner pressure was 0.1 MPa (absolute pressure), and tetrachlorosilane was continuously evaporated.

The vaporized tetrachlorosilane was mixed with hydrogen at a molar ratio of 1:2, preheated by the preheater to 600 °C, and continuously supplied to the reactor at a flow rate of 27 mol/hr.

The reactor was heated to keep the central temperature of the reaction vessel with the substances accommodated inside at 1300 °C

The reaction product gas generated in the reactor was let out to the quenching tower, and was sprayed with a coolant consisting of a mixture of trichlorosilane and tetrachlorosilane (molar ratio = 85:15) kept at 30 °C under conditions with a spray rate of 0.11/min and a spray pressure of 0.15 MPa.

The cooled and uncondensed gas removed from the top of the quenching tower was transferred to the condenser, hydrogen and hydrogen chloride were removed, the remaining condensate liquid was let out to the tank, the accumulation liquid in the tank was transferred to the distillation column, and fractional distillation of trichlorosilane and tetrachlorosilane was performed. The obtained tetrachlorosilane was transferred to the evaporator and reused as source gas.

Furthermore, for every 10 hours of continuous operation of the plant, the unevaporated fraction accumulating at the bottom of the evaporator and the cooled condensate liquid (containing the coolant) removed from the quenching tower were let out to the concentrating column, and subjected to distillation under conditions of 150 °C and 0.2 MPa (absolute pressure), the low boiling material removed from the top of the concentrating column was cooled, condensed and let out to the tank, and fractional distillation of trichlorosilane and tetrachlorosilane was performed. The tetrachlorosilane obtained here was also transferred to the evaporator and reused as source gas. On the other hand, the concentrated high boiling material accumulating at the bottom of the concentrating column was collected as a hexachlorodisilane stock solution.

In this manner, by regularly extracting the unevaporated fraction and cooled condensate liquid from the evaporator and quenching tower and collecting the high boiling material, the burden on the evaporator could be reduced as compared to cases where such extraction is not performed, and not only could the blocking of spray nozzles for spraying the coolant and pipes be prevented, industrially useful hexachlorodisilane could be collected.

The present invention has been explained with reference to an example above. This example is only an exemplification, and those skilled in the art will recognize that various modifications are possible.

## Claims

1. A method for collecting hexachlorodisilane, comprising the steps of:
- reacting a source gas containing vaporized tetrachlorosilane and hydrogen at a temperature ranging from 700 to 1400 °C to obtain a reaction product gas;
- cooling the reaction product gas to a temperature range of 30 to 60 °C to obtain a cooled condensate liquid containing hexachlorodisilane; and
- concentrating and collecting a high boiling material containing hexachlorodisilane from the cooled condensate liquid.

2. The method for collecting hexachlorodisilane according to claim 1, wherein the reaction product gas is cooled by spraying a coolant.

3. The method for collecting hexachlorodisilane according to claim 2, wherein the coolant is a liquid mixture of tetrachlorosilane and trichlorosilane.

4. The method for collecting hexachlorodisilane according to claim 3, wherein the tetrachlorosilane content in the coolant is 85 to 95 mol%.

5. The method for collecting hexachlorodisilane according to claim 1, wherein hexachlorodisilane is concentrated and collected from the cooled condensate liquid by distillation under conditions of 60 to 200 °C and atmospheric pressure to 0.3 MPa (absolute pressure).

6. The method for collecting hexachlorodisilane according to claim 1, comprising a step of supplying to the source gas tetrachlorosilane collected from a cooled and uncondensed gas obtained when cooling the reaction product gas.

7. The method for collecting hexachlorodisilane according to claim 1, comprising a step of supplying to the source gas tetrachlorosilane collected from a low boiling material obtained when concentrating and collecting hexachlorodisilane from the cooled condensate liquid.

8. The method for collecting hexachlorodisilane according to claim 1, comprising a step of concentrating and collecting a high boiling material containing hexachlorodisilane from an unevaporated fraction obtained when vaporizing tetrachlorosilane.

9. The method for collecting hexachlorodisilane according to claim 8, comprising a step of supplying to the source gas tetrachlorosilane collected from a low boiling material obtained when concentrating and collecting hexachlorodisilane from the unevaporated fraction obtained when vaporizing tetrachlorosilane.

## Patentansprüche

1. Verfahren zum Sammeln von Hexachlordisilan, umfassend die folgenden Schritte:
- Umsetzen einer Gasquelle, die verdampftes Tetrachlorsilan und Wasserstoff enthält, bei einer Temperatur in einem Bereich von 700 bis 1400°C, um ein Gas zu erhalten, das das Reaktionsprodukt ist;
- Abkühlen des Gases, das das Reaktionsprodukt ist, auf einen Temperaturbereich von 30 bis 60°C, um eine abgekühlte Kondensatflüssigkeit zu erhalten, die Hexachlordisilan enthält; und
- Konzentrieren und Sammeln eines hochsiedenden Materials, das Hexachlordisilan enthält, aus der abgekühlten Kondensatflüssigkeit.

2. Verfahren zum Sammeln von Hexachlordisilan nach Anspruch 1, wobei das Gas, das das Reaktionsprodukt ist, durch Besprühen mit einem Kühlmittel abgekühlt wird.

3. Verfahren zum Sammeln von Hexachlordisilan nach Anspruch 2, wobei das Kühlmittel eine Flüssigkeitsmischung von Tetrachlorsilan und Trichlorsilan ist.

4. Verfahren zum Sammeln von Hexachlordisilan nach Anspruch 3, wobei der Gehalt an Tetrachlorsilan in dem Kühlmittel 85 bis 95 Mol-% beträgt.

5. Verfahren zum Sammeln von Hexachlordisilan nach Anspruch 1, wobei das Hexachlordisilan aus der abgekühlten Kondensatflüssigkeit durch Destillation unter Bedingungen von 60 bis 200°C und einem Atmosphärendruck bis 0,3 MPa (Absolutdruck) konzentriert und gesammelt wird.

6. Verfahren zum Sammeln von Hexachlordisilan nach Anspruch 1, welches einen Schritt des Zuführens zu der Gasquelle von Tetrachlorsilan umfasst, das aus einem abgekühlten und nicht kondensierten Gas gesammelt wurde, das erhalten wird, wenn das Gas, das das Reaktionsprodukt ist, abgekühlt wird.

7. Verfahren zum Sammeln von Hexachlordisilan nach Anspruch 1, umfassend einen Schritt des Zuführens zu der Gasquelle von Tetrachlorsilan, das aus einem niedrigsiedenen Material gesammelt wurde, das erhalten wird, wenn das Hexachlordisilan aus der abgekühlten Kondensatflüssigkeit konzentriert und gesammelt wird.

8. Verfahren zum Sammeln von Hexachlordisilan nach Anspruch 1, umfassend einen Schritt des Konzentrierens und Sammelns eines hochsiedenen Materials, das Hexachlordisilan enthält, aus der nicht verdampften Fraktion, die erhalten wird, wenn das Tetrachlorsilan verdampft wird.

9. Verfahren zum Sammeln von Hexachlordisilan nach Anspruch 8, umfassend einen Schritt des Zuführens zu der Gasquelle von Tetrachlorsilan, das aus einem niedrigsiedenen Material gesammelt wurde, das erhalten wird, wenn das Hexachlordisilan aus der nicht verdampften Fraktion konzentriert und gesammelt wird, die erhalten wird, wenn das Tetrachlorsilan verdampft wird.

## Revendications

1. Procédé pour collecter de l'hexachlorodisilane, comprenant les étapes consistant à :
- faire réagir un gaz source contenant du tétrachlorosilane vaporisé et de l'hydrogène à une température située dans la plage allant de 700 à 1400°C pour obtenir un produit réactionnel gazeux ;
- refroidir le produit réactionnel gazeux à une température située dans la plage allant de 30 à 60°C pour obtenir un condensat liquide refroidi contenant de l'hexachlorodisilane ; et
- concentrer et collecter un matériau à haut point d'ébullition contenant de l'hexachlorodisilane à partir du condensat liquide refroidi.

2. Procédé pour collecter de l'hexachlorodisilane selon la revendication 1, dans lequel le produit réactionnel gazeux est refroidi par pulvérisation d'un réfrigérant.

3. Procédé pour collecter de l'hexachlorodisilane selon la revendication 2, dans lequel le réfrigérant est un mélange liquide de tétrachlorosilane et de trichlorosilane.

4. Procédé pour collecter de l'hexachlorodisilane selon la revendication 3, dans lequel la teneur en tétrachlorosilane du réfrigérant est de 85 à 95 % en moles.

5. Procédé pour collecter de l'hexachlorodisilane selon la revendication 1, dans lequel l'hexachlorodisilane est concentré et collecté à partir du condensat liquide refroidi par distillation dans des conditions de 60 à 200°C et sous une pression allant de la pression atmosphérique à 0,3 MPa (pression absolue).

6. Procédé pour collecter de l'hexachlorodisilane selon la revendication 1, comprenant une étape consistant à fournir au gaz source du tétrachlorosilane collecté à partir d'un gaz refroidi et non condensé obtenu lors du refroidissement du produit réactionnel gazeux.

7. Procédé pour collecter de l'hexachlorodisilane selon la revendication 1, comprenant une étape consistant à fournir au gaz source du tétrachlorosilane collecté à partir d'un matériau à bas point d'ébullition obtenu lors de la concentration et de la collecte d'hexachlorodisilane à partir du condensat liquide refroidi.

8. Procédé pour collecter de l'hexachlorodisilane selon la revendication 1, comprenant une étape consistant à concentrer et collecter un matériau à haut point d'ébullition contenant de l'hexachlorodisilane à partir d'une fraction non évaporée obtenue lors de la vaporisation du tétrachlorosilane.

9. Procédé pour collecter de l'hexachlorodisilane selon la revendication 8, comprenant une étape consistant à fournir au gaz source du tétrachlorosilane collecté à partir d'un matériau à bas point d'ébullition obtenu lors de la concentration et de la collecte d'hexachlorodisilane à partir de la fraction non évaporée obtenue lors de la vaporisation du tétrachlorosilane.
